# EUROPEAN PATENT SPECIFICATION

(11) **EP 0 482 179 B1**
(45) Date of publication and mention of the grant of the patent: **25.09.1996**
(21) Application number: 91910109.7
(22) Date of filing: 13.05.1991
(51) Int. Cl.: C08L 81/02, C08L 23/02, C08L 63/00

(54) **BLENDS FROM AMINO-FUNCTIONALIZED POLYPHENYLENE RESINS AND ETHYLENE-GLYCIDYL METHACRYLATE COPOLYMERS**
MISCHUNGEN AUS AMINO-FUNKTIONALISIERTEN POLYPHENYLENHARZEN UND ETHYLEN-GLYCIDYL-METHACRYLAT-COPOLYMEREN
MELANGES A BASE DE RESINES DE POLYPHENYLENE FONCTIONNALISEES AMINO, ET DE COPOLYMERES DE METHACRYLATE ETHYLENE-GLYCIDYLE

(30) Priority: 11.05.1990 US 521969
(43) Date of publication of application: 29.04.1992
(73) Proprietor: GENERAL ELECTRIC COMPANY, Schenectady, NY 12345 (US)
(72) Inventor: HAN, Choong, Yol, Pittsfield, MA 01201 (US)
(74) Representative: Szary, Anne Catherine
(86) International application number: US9103333
(87) International publication number: WO9118054

(56) References cited:
- EP-A- 0 228 268
- WPIL File Supplier, AN = 86-282593, Derwent Publications Ltd, (London, GB)
- WPIL File Supplier, AN = 86-071993, Derwent Publications Ltd, (London, GB)

## Description

### BACKGROUND OF THE INVENTION

### Field of the Invention

The present invention relates to polyphenylene sulfide/olefin copolymer blends, and more particularly relates to blends of amino functionalized polyphenylene sulfide with olefin copolymer.

### DescriDtion of Related Art

Blends of polyphenylene sulfide resin with an olefin copolymer containing (i) and α-olefin such as ethylene and (ii) an ester of α, β-unsaturated carboxylic acid such as glycidyl methacrylate are set forth in European Patent Application 0228268 which teaches treating the polyphenylene sulfide with acid treatments and water treatments to improve the polyphenylene sulfide resins affinity with the olefin copolymer. While blends of polyphenylene sulfide resin and olefin copolymers can exhibit acceptable levels of various properties for certain applications, it is often desirable to enhance levels of particular properties of the blends.

Accordingly, one object of the present invention involves providing polyphenylene sulfide/olefin copolymer blends exhibiting improved physical properties.

### SUMMARY OF THE INVENTION

The present invention involves blends of amino-functionalized polyphenylene sulfide and olefin copolymers. The blends exhibit improved physical properties such as unnotched Izod impact strengths and percent tensile elongation.

The present invention provides a polyphenylene sulfide composition comprising based on the total weight of the composition :
(a) from 50% to 99.5% of an amino functional polyphenylene sulfide having an amine equivalent level of from 10 to 200 primary amine milliequivalents per kilogram of polyphenylene sulfide said polyphenylene sulfide comprising at least 70 molar % recurring units of the structural formula 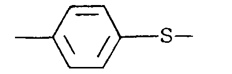 wherein said polyphenylene sulfide is the reaction product of :
   Na₂S, 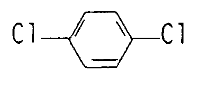 and a haloaminoaryl selected from the group consisting of : 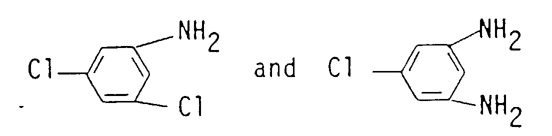 and
(b) from 0.5% to 50% of an olefin copolymer reaction product of an α-olefin and a glycidyl ester of an α,β-unsaturated carboxylic acid, said α-olefin being present at a level of from 60% to 99.5% by weight based on the total weight of α-olefin and glycidyl ester of α,β-unsaturated carboxylic acid, said glycidyl ester of α,β-unsaturated carboxylic acid being present at a level of from 0.5% to 40% by weight based on the total weight of α-olefin and glycidyl ester of α,β-unsaturated carboxylic acid.

The polyphenylene sulfide polymer can be linear, branched or lightly crosslinked. Suitable polyphenylene sulfide polymers can be produced, for example, by the methods of Edmonds, et. al., in U.S. Patent No. 3,354,129 and Campbell in U.S. Patent No. 3,919,177. If desired, such polymers can be subjected to mild, partial curing or light crosslinking, as in the method of Rohlfing, U.S. Patent No. 3,717,620, prior to being used in the compositions of this invention. The polymers will generally have crystalline melting points ranging from about 200°C to about 480°C. A presently preferred polyphenylene sulfide polymer (PPS) has a crystalline melting point ranging from about 250°C to 300°C. Preferred polyphenylene sulfide polymers have an inherent viscosity in 1-chloronaphthalene at 206°C and a polymer concentration of 0.4 g/100 ml solution ranging from about 0.1 to 0.6.

The polyphenylene sulfide (hereinafter referred to as PPS) used in the present invention is a polymer comprising at least 70 molar %, preferably at least 90 molar %, of recurring units of the structural formula: 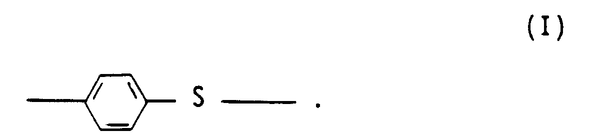 When the amount of said recurring units is less than 70 molar %, the heat resistance is insufficient.

PPS polymers include generally those having a relatively low molecular weight prepared by, for example, a process disclosed in the specification of U.S. Patent No. 3,354,129 and essentially linear polymers having a relatively high molecular weight prepared by, for example, a process disclosed in the specification of U.S. Patent No. 3,919,177. The degree of polymerization of the polymers prepared by the process of U.S. Patent No. 3,354,129 can be further increased by heating the same in an oxygen atmosphere or in the presence of a crosslinking agent such as a peroxide after the polymerization. Though PPS prepared by any process can be used in the present invention, an essentially linear polymer having a relatively high molecular weight prepared by the process of said U.S. Patent No. 3,919,177 may be preferable.

Thirty (30) molar % or less of the recurring units of PPS can be those of the structural formulae:

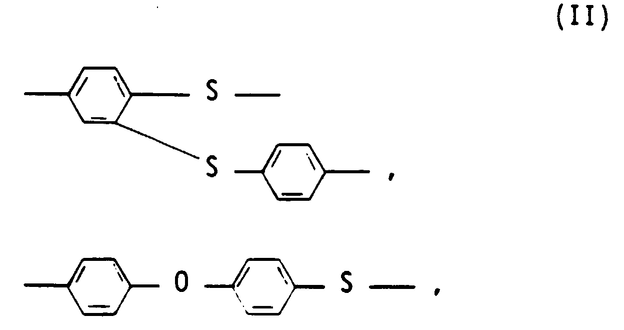

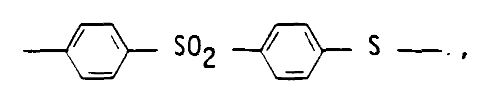

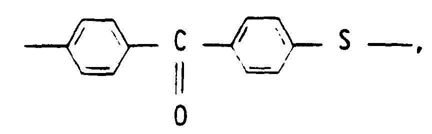

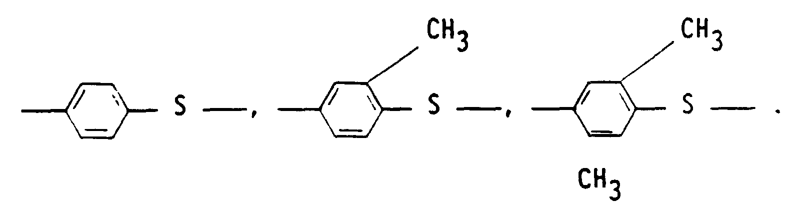

Though the melt viscosity of PPS used in the present invention is not particularly limited so far as the moldings can be obtained, a melt viscosity of at least 100 poise is preferred from the viewpoint of the toughness of PPS per se and that of 10,000 poise or less is preferred from the viewpoint of the moldability.

The amine functionality may be incorporated into the PPS by a number of ways. One of these, disclosed, for example, in U.S. Patent No. 4,769,424, comprises the reaction of a dihalodiaryl sulfide with an alkali metal sulfide to form a halogen-terminated polyarylene sulfide, which then undergoes further reaction with an amino substituted thiophenol with elimination of hydrogen halide to form a polyarylene sulfide having the required amino substituents on the end groups.

Another method, disclosed and claimed in copending application Serial No. 07/373,080, is the reaction of a polyarylene sulfide with a disulfide containing the required amino functional groups, typically at temperatures in the range of about 225°C to 375°C, in the melt or in solution in a suitable high boiling solvent such as 1-chloronaphthalene.

The haloaminoaryl is preferably present in the reactants at a level of from 0.1 to 5 mole % based on the total moles of haloaminoaryl and dihaloaryl, more preferably from 0.3 to 2 mole % thereof, and most preferably about 0.5 to 1.0 mole % thereof.

It is expected that amino functional linear PPS containing low levels of sodium will exhibit the best overall unnotched Izod impact strengths and percent tensile elongations. The comparison examples provided in this application directed to branched PPS and lightly crosslinked PPS, however, establish the improved properties obtained by employing amino functionality in the various PPS resin over similar resins lacking the amino functionality. Branching and crosslinking of the PPS can be achieved by an oxidation of the PPS.

The amino functional PPS has a primary amine level of from 10 to 200 primary amine milliequivalents per kilogram PPS, and preferably from 20 to 100 primary amine milliequivalents per kilogram PPS.

The olefinic copolymers (B) used in the present invention are copolymers of an α-olefin with a glycidyl ester of an α, β-unsaturated acid. The term "α-olefin" as used herein means ethylene, propylene, butene-1, etc. Among them, ethylene is preferred. Preferably the α-olefin is present from 70% to 97% by weight based on the total weight of α-olefin and glycidal ester of α, β-unsaturated carboxylic acid. The glycidyl esters of the α, β-unsaturated acids are compounds of the general formula: 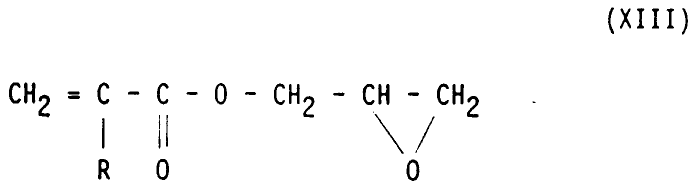 wherein R represents a hydrogen atom or a lower alkyl group.

Examples of the glycidyl esters of α, β-unsaturated acids include glycidyl acrylate, methacrylate and ethacrylate. Among them, glycidyl methacrylate is preferred. The amount of the glycidyl ester of the α, β-unsaturated acid in the olefinic copolymer is 0.5% to 40% by weight, preferably 3% to 30% by weight. When this amount is less than 0.5% by weight, no intended effects can be obtained and, on the contrary, when it exceeds 40% by weight, gelation can occur during melt-blending with PPS which can damage the extrusion stability, moldability and mechanical properties of the product.

The olefinic copolymer may further be copolymerized with 40% by weight or less of another copolymerizable unsaturated monomer such as vinyl ether, vinyl acetate, vinyl propionate, methyl acrylate, methyl methacrylate, acrylonitrile or styrene.

The preferred olefin copolymer is a 90/10 weight ratio ethylene/glycidyl methacrylate copolymer. A suitable copolymer is sold under the trade name Bondfast E® by Sumitomo Chemical.

Fibrous and/or granular reinforcing agent can be incorporated in an amount of 50 parts by weight or less for 100 parts by weight of the total weight of PPS and the olefinic copolymer, if necessary, in the present invention. Usually, the strength, rigidity, heat resistance and dimensional stability of the product can be improved by incorporating 10 to 50 parts by weight of the reinforcing agent.

The fibrous reinforcing agents include inorganic and carbonaceous fibers such as glass fibers, shirasu glass fibers, alumina fibers, silicon carbide fibers, ceramic fibers, asbestos fibers, gypsum fibers and metal fibers.

Examples of the granular reinforcing agents include silicates such as wollastonite, sericite, kaolin, mica, clay, bentonite, asbestos, talc, alumina silicate; metal oxides such as alumina and oxides of silicon, magnesium, zirconium and titanium; carbonates such as calcium and magnesium carbonates and dolomite; sulfates such as calcium and barium sulfates; as well as glass beads, boron nitride, silicon carbide, sialon and silica. These granules may be hollow. These reinforcing agents may be used either alone or in the form of a mixture of two or more of them. If necessary, they can be pretreated with a silane or titanium coupling agent.

The preferred fibers are glass fibers and, if employed, are preferably at a level of from 5% to 30% by weight based on the total weight of the composition.

The amino functional polyphenyl sulfide resin is present in the composition at a level of from 50% to 99.5% by weight based on the total weight of the composition, preferably from 70% to 96% by weight thereof, and more preferably about 94% to 96% by weight thereof; the olefin copolymer is present at a level of from 0.5% to 50% by weight of the composition, preferably from 4% to 30% by weight thereof, and more preferably about 4% to 6% by weight thereof. The composition may contain reinforcing fibers such as glass fibers at a level of from 1% to about 50% by weight of the composition, or may be free of reinforcing fibers.

### EXAMPLES

The following examples are meant to illustrate the present invention but not limit the scope thereof.

For mixtures of PPS and olefin copolymer, the mixtures were extruded on a twin-screw extruder at temperatures from 250°C to 350°C. The extrudates were quenched in water, pelletized, dried and molded into test specimens which were then tested.

Heat distortion temperatures (HDT) were measured in °C (°F) under a load of 1.82 MPa (264 psi) pursuant to ASTM D648; Unnotched Izod Impact strengths (UNI) were measured in Nm (ft-1b) pursuant to ASTM 0256; Notched Izod Impact Strengths (NI) were measured in Nm (ft-1b) pursuant to ASTM D256; Tensile elongation (TE) was measured as % elongation pursuant to ASTM D638; Tensile Strength was measured MPa in (Kpsi) pursuant to ASTM D638; Flexural Strength was measured in MPa (Kpsi) pursuant to ASTM D790; and Flexural modulus was measured in MPa (Kpsi) pursuant to ASTM D790.

### PPS COMPARATIVE EXAMPLE A

The PPS of the comparative example A was made by reacting respective amounts of disodium sulfide and para dichlorophenyl in N-methyl-2-pyrrolidone (NMP) solvent 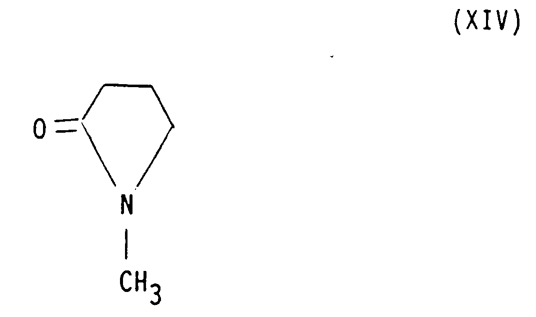 according to the method of U.S. Patent No. 3,354,129, and has a melt viscosity of about 3000 poise and a primary amine equivalence of less than 7 amine milliequivalents per kilogram of PPS.

### PPS COMPARATIVE EXAMPLE B

Example B was made by heating the PPS of the comparative example A in a forced air oven for 4 hours at 260°C, causing increase in melt viscosity to about 8000 poise.

### AMINO FUNCTIONAL PPS EXAMPLES (EXAMPLES 1-4)

Example 1 is an amino functional PPS made by reacting about a 0.008/1.00/0.992 mol ratio of the following reactants: 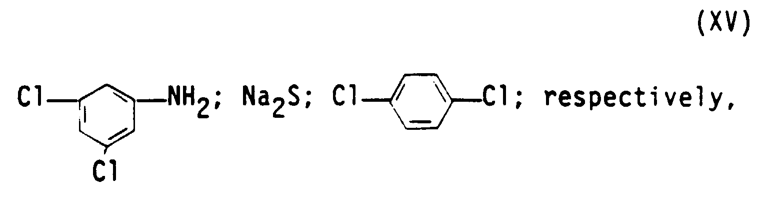 using the method of U.S. Patent No. 3,354,129 and having a melt viscosity of about 3000 poise and a primary amine equivalence of about 60 amine milliequivalent per kilogram.

Example 2 is an amino functional PPS made by reacting about a 0.006/1.00/0.994 mol ratio of: 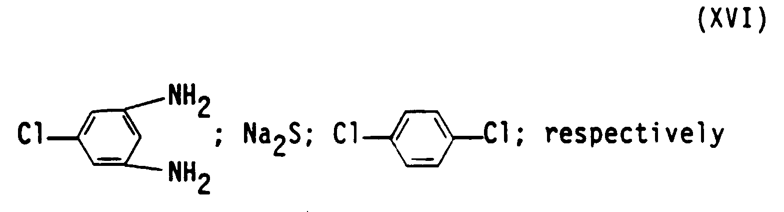 using the method of U.S. Patent No. 3,354,129 and having a melt viscosity of about 3000 poise and a primary amine equivalence of above 7 and below 40 meq/kg.

Example 3 is an amino functional PPS made using the reactants in the ratios of Example 1 but exposed to longer cure at a temperature of about 260°C for a longer cure than example 1's PPS resulting in an amino functional PPS having a melt viscosity of about 8000 poise and an amine equivalent of about 50 amine meq/kg.

Example 4 is an amino functional PPS made using the reactants in the ratios of Example 2 but exposed to longer cure at a temperature of about 260°C for a longer cure than the PPS of Example 2 resulting in an amino functional PPS having a melt viscosity of about 8000 poise and a primary amine equivalent of greater than 7 and less than 40 primary amine milliequivalents per kg of PPS.

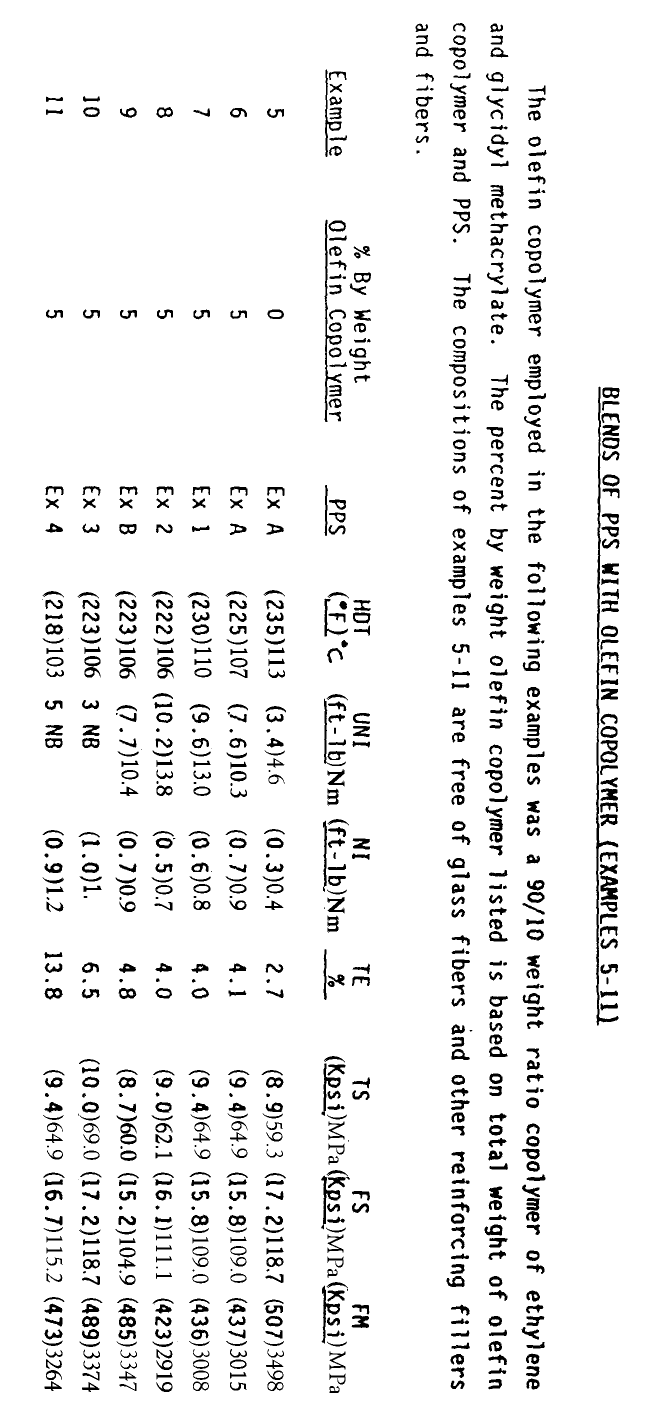

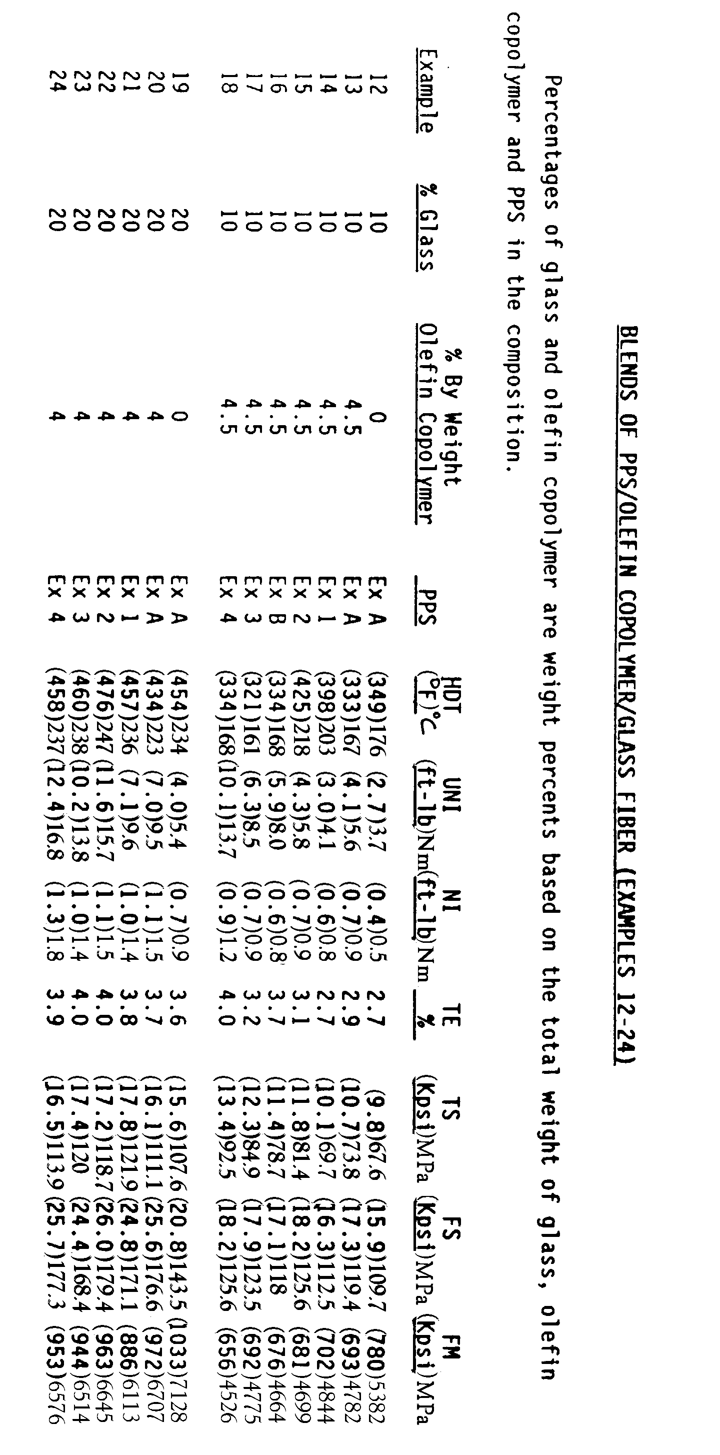

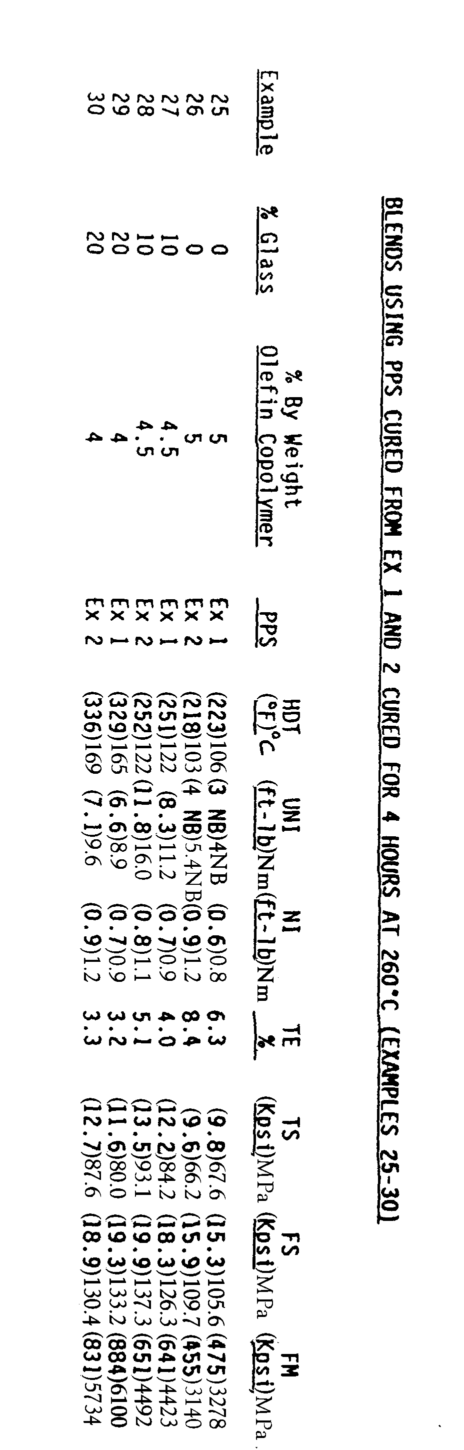

The weight percents of the above compositions are set out for the glass and olefin copolymer. The weight percent of that remains is the weight percent of the PPS listed.

Note that the amine functional PPS of Example 1 and 2, when blended with the olefin copolymer, generally provided superior tensile elongation and unnotched Izod impact strength to blends of the PPS of comparative Example A with the olefin copolymer. The PPS of Examples 1 and 2 are similar to the PPS of Comparative Example A except for the high degree of amino functionality of the PPS of Examples 1 and 2. Generally, the higher the melt viscosity of the amine functional PPS the better the physical properties of the blends.

The amine functional PPS of Example 3 and 4, when blended with the olefin copolymer, provided superior physical properties to blends of the PPS of comparative Example B with the olefin copolymer. The PPS of Examples 3 and 4 are similar to the PPS of Comparative Example B except for the high degree of amino functionality of the PPS of Examples 3 and 4.

## Claims

1. A polyphenylene sulfide composition comprising, based on the total weight of the composition :
(a) from 50% to 99.5% of an amino functional polyphenylene sulfide having an amine equivalent level of from 10 to 200 primary amine milliequivalents per kilogram of polyphenylene sulfide said polyphenylene sulfide comprising at least 70 molar % recurring units of the structural formula 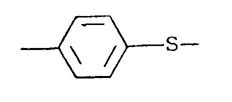 wherein said polyphenylene sulfide is the reaction product of :
Na₂S, 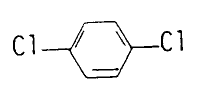 and a haloaminoaryl selected from the group consisting of : 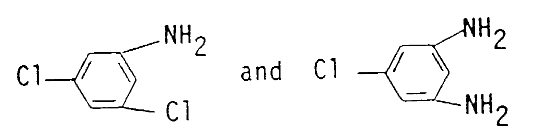 and
(b) from 0.5% to 50% of an olefin copolymer reaction product of an α-olefin and a glycidyl ester of an α,β-unsaturated carboxylic acid, said α-olefin being present at a level of from 60% to 99.5% by weight based on the total weight of α-olefin and glycidyl ester of α,β-unsaturated carboxylic acid, said glycidyl ester of α,β-unsaturated carboxylic acid being present at a level of from 0.5% to 40% by weight based on the total weight of α-olefin and glycidyl ester of α,β-unsaturated carboxylic acid.

2. The composition of Claim 1 wherein said α-olefin is ethylene, and said ester of α,β-unsaturated carboxylic acid is glycidyl methacrylate.

3. The composition of Claim 1 or Claim 2 wherein said olefin copolymer is present at a level of from 4% to 30% by weight based on the total weight of the composition.

4. The composition of any preceding claim wherein said composition further comprises from 1% to 50% by weight glass fibers based on the total weight of the composition.

5. The composition of any preceding claim wherein said α-olefin is present at a level of from 70% to 97% by weight based on the total weight of α-olefin and glycidyl ester of α,β-unsaturated carboxylic acid.

6. The polyphenylene sulfide composition of Claim 1 consisting essentially of, based on the total weight of the composition of (a) and (b) :
(a) from 50% to 99.5% by weight of amino functional polyphenylene sulfide; and
(b) from 0.5% to 50% by weight of the composition of olefin copolymer.

## Patentansprüche

1. Polyphenylensulfid-Zusammensetzung, enthaltend,auf das Gesamtgewicht der Zusammensetzung bezogen:
(a) 50 - 99,5 % eines aminofunktionellen Polyphenylensulfids mit einem Aminäquivalentgehalt von 10 - 200 primären Aminmilliäquivalenten pro Kilogramm des Polyphenylensulfids, wobei das besagte Polyphenylensulfid wenigstens 70 Mol-% wiederkehrende Einheiten der Strukturformel 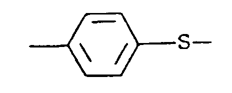 umfaßt, worin das besagte Polyphenylensulfid das Reaktionprodukt ist von
Na₂S, 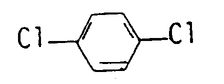 und einem Halogenaminoaryl, ausgewählt aus der Gruppe bestehend aus 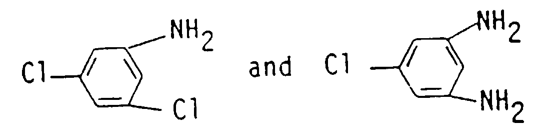 und
(b) 0,5 - 50 % eines Olefincopolymeren Reaktionsproduktes eines α-Olefins und eines Glycidylesters einer α, β-ungesättigten Carbonsäure, wobei besagtes α-Olefin in einer Menge von 60 - 99,5 Gew.-%, bezogen auf das Gesamtgewicht des α-Olefins und des Glycidylesters der α, β-ungesättigten Carbonsäure, vorhanden ist, wobei besagter Glycidylester der α, β-ungesättigten Carbonsäure in einer Menge von 0,5 - 40 Gew.-%, bezogen auf das Gesamtgewicht des α-Olefins und des Glycidylesters der α, β-ungesättigten Carbonsäure vorhanden ist.

2. Zusammensetzung nach Anspruch 1, worin das besagte α-Olefin Äthylen ist und der besagte Ester der α, β-ungesättig-ten Carbonsäure Glycidylmethacrylat ist.

3. Zusammensetzung nach Anspruch 1 oder Anspruch 2, worin das besagte Olefincopolymer in einer Menge von 4 - 30 Gew.-%, bezogen auf das Gesamtgewicht der Zusammensetzung, vorhanden ist.

4. Zusammensetzung nach einem der vorhergehenden Ansprüche, wobei die besagte Zusammensetzung weiterhin 1 - 50 Gew.-% Glasfasern, bezogen auf das Gesamtgewicht der Zusammensetzung, enthält.

5. Zusammensetzung nach einem der vorhergehenden Ansprüche, worin das besagte -Olefin in einer Menge von 70 - 97 Gew.-%, bezogen auf das Gesamtgewicht des α-Olefins und des Glycidylesters der α, β-ungesättigten Carbonsäure, vorhanden ist.

6. Polyphenylensulfid-Zusammensetzung nach Anspruch 1, bestehend im wesentlichen - auf das Gesamtgewicht der Zusammensetzung aus (a) und (b) bezogen - aus
(a) 50 - 99,5 Gew.-% des aminofunktionellen Polyphenylensulfids und
(b) 0,5 - 50 Gew.-% der Zusammensetzung des Olefincopolymeren.

## Revendications

1. Composition de poly(sulfure de phénylène) comprenant, par rapport à son poids total :
a) de 50 à 99,5 % d'un poly(sulfure de phénylène) à fonctions amine, dont la teneur en équivalents amine vaut de 10 à 200 milliéquivalents amine primaire par kilogramme de poly(sulfure de phénylène), ledit poly(sulfure de phénylène) comportant au moins 70 % en moles de motifs répétés de formule structurale 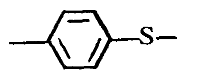 et ledit poly(sulfure de phénylène) étant le produit de la réaction de Na₂S, 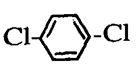 et d'un halogénoaminoarène choisi parmi 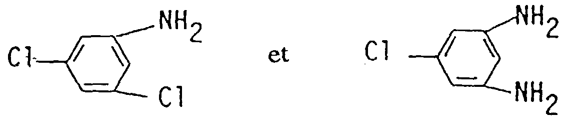 et
b) de 0,5 à 50 % d'un copolymère d'oléfine qui est le produit de réaction d'une α-oléfine et d'un ester glycidylique d'un acide carboxylique α,β-insaturé, ladite α-oléfine se trouvant présente à raison de 60 à 99,5 % en poids, par rapport au poids total de l'α-oléfine et de l'ester glycidylique d'acide carboxylique α, β-insatwé, et ledit ester glycidylique d'acide carboxylique α, β-insaturé se trouvant présent à raison de 0,5 à 40 % en poids, par rapport au poids total de l'α-oléfine et de l'ester glycidylique d'acide carboxylique α, β-insaturé.

2. Composition conforme à la revendication 1, dans laquelle ladite α-oléfine est de l'éthylène et ledit ester glycidylique d'acide carboxylique α, β-insaturé est du méthacrylate de glycidyle.

3. Composition conforme à la revendication 1 ou 2, dans laquelle ledit copolymère d'oléfine se trouve présent à raison de 4 à 30 % en poids, par rapport au poids total de la composition.

4. Composition conforme à l'une des revendications précédentes, laquelle composition contient en outre de 1 à 50 % en poids de fibres de verres, par rapport au poids total de la composition.

5. Composition conforme à l'une des revendications précédentes, dans laquelle ladite α-oléfine se trouve présente à raison de 70 à 97 % en poids, par rapport au poids total de l'α-oléfine et de l'ester glycidylique d'acide carboxylique α, β-insaturé.

6. Composition de poly(sulfure de phénylène), conforme à la revendication 1, constituée essentiellement de
a) 50 à 99,5% en poids de poly(sulfure de phénylène) à fonctions amine, et de
b) 0,5 à 50 % en poids de copolymère d'oléfine, par rapport au poids total de la composition de (a) et (b).
